(19) Europäisches Patentamt
European Patent Office
Office européen des brevets

(11) EP 4 321 552 A1

(12) EUROPEAN PATENT APPLICATION

(43) Date of publication:
**14.02.2024 Bulletin 2024/07**

(21) Application number: **23190151.3**

(22) Date of filing: **08.08.2023**

(51) International Patent Classification (IPC):
***C08G 18/44*** *(2006.01)* ***C08G 18/10*** *(2006.01)*
***C08G 18/24*** *(2006.01)* ***C08G 18/32*** *(2006.01)*
***C08G 18/76*** *(2006.01)* ***C08G 64/30*** *(2006.01)*
***D06N 3/14*** *(2006.01)*

(52) Cooperative Patent Classification (CPC):
(C-Sets available)
**C08G 18/10; C08G 18/246; C08G 18/3206; C08G 18/44; C08G 18/7671; C08G 63/64; C08G 63/672; C08G 64/305; D06N 3/146** (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **09.08.2022 JP 2022126846**
**21.07.2023 JP 2023119263**

(71) Applicant: **Asahi Kasei Kabushiki Kaisha**
**Tokyo 1000006 (JP)**

(72) Inventors:
- **MATSUBURA, Riku**
**Tokyo, 1000006 (JP)**
- **SENDA, Kosuke**
**Tokyo, 1000006 (JP)**

(74) Representative: **Strehl Schübel-Hopf & Partner**
**Maximilianstrasse 54**
**80538 München (DE)**

# (54) CARBONATE GROUP-CONTAINING POLYOL, POLYURETHANE RESIN COMPOSITION, ARTIFICIAL LEATHER, AND LEATHER-LIKE SHEET

(57) Provided is a carbonate group-containing polyol that has low viscosity and excellent handleability which lead to reduction in the amount of a solvent used at the time of coating material or polyurethane production, by decreasing the viscosity of polyol itself, and in addition, can produce polyurethane excellent in low-temperature flexibility and moist heat resistance. The present invention provides a carbonate group-containing polyol having a number-average molecular weight of 300 to 10000, and having a predetermined constituent unit (A), a predetermined constituent unit (B), and a predetermined constituent unit (C), wherein a content of the constituent unit (A) is 20 to 80% by mass based on the total mass of the constituent units (A), (B), and (C).

EP 4 321 552 A1

(52) Cooperative Patent Classification (CPC): (Cont.)

C-Sets
**C08G 18/10, C08G 18/3206**

**Description**

BACKGROUND OF THE INVENTION

Field of the Invention

The present invention relates to a carbonate group-containing polyol, a polyurethane resin composition, an artificial film, and a leather-like sheet.

Description of the Related Art

Polyurethane resins have heretofore been used in a wide range of fields such as synthetic leather, artificial leather, adhesives, coating materials for furniture, and coating materials for automobiles. Of starting materials of the polyurethane resins, polyether, polyester, and polycarbonate are used as polyol components to be reacted with isocyanate. However, in recent years, there has been a growing demand for durability, such as heat resistance, weather resistance, hydrolysis resistance, solvent resistance, sunscreen resistance, or scratch resistance, of polyurethane resins. Meanwhile, in the Europe, China, etc., a shift to materials that can achieve VOC reduction is being promoted with the aim of reducing environmental load.

For example, Japanese Patent Laid-Open No. 3-252420 discloses a method for producing copolymerized polycarbonate diol economically and conveniently. For example, Japanese Patent Laid-Open No. 2006-124486 discloses a polycarbonate diol/polyether block copolymer. In addition, for example, Japanese Patent Laid-Open No. 2021-98775 discloses a moisture-curable polyurethane hotmelt resin composition containing polyether polyol, polyester polyol, polycarbonate polyol, and the like. Besides, for example, Japanese Patent Laid-Open No. 2021-28161 discloses urethane resin using polytetramethylene glycol, polyester polyol, and polycarbonate polyol as polyols.

Patent Literature 1: Japanese Patent Laid-Open No. 3-252420
Patent Literature 2: Japanese Patent Laid-Open No. 2006-124486
Patent Literature 3: Japanese Patent Laid-Open No. 2021-98775
Patent Literature 4: Japanese Patent Laid-Open No. 2021-28161

However, polycarbonate polyol, when used alone, has high viscosity as compared with other polyols. Therefore, the viscosity of polycarbonate polyol is generally decreased using an organic solvent in order to facilitate its handling.

For example, use of polycarbonate polyol requires a large amount of a solvent for the production of coating materials or polyurethane. A polyurethane resin obtained using polycarbonate diol described in Japanese Patent Laid-Open No. 3-252420 or Japanese Patent Laid-Open No. 2006-124486 is susceptible to improvement for purposes that require strict physical properties of low-temperature flexibility and durability.

In Japanese Patent Laid-Open Nos. 2021-98775 and 2021-28161, a plurality of polyols are used, and however, there is room for improvement in handleability because polycarbonate polyol, one of the starting materials, has high viscosity.

Accordingly, the present invention has been made in light of the situation described above, and an object of the present invention is to provide a carbonate group-containing polyol that has low viscosity and excellent handleability which lead to reduction in the amount of a solvent used at the time of coating material or polyurethane production, by decreasing the viscosity of polyol itself, and in addition, can produce polyurethane excellent in low-temperature flexibility and moist heat resistance.

SUMMARY OF THE INVENTION

The present inventors have conducted diligent studies and consequently completed the present invention by finding that a specific carbonate group-containing polyol has low viscosity and excellent handleability, and an excellent in low-temperature flexibility and moist heat resistance can be produced by using a specific carbonate group-containing polyol.

Specifically, the present invention includes aspects given below.

[1] A carbonate group-containing polyol

having a number-average molecular weight of 300 to 10000, and having
a constituent unit (A) represented by the following formula (A),
a constituent unit (B) represented by the following formula (B), and

a constituent unit (C) represented by the following formula (C), wherein
a content of the constituent unit (A) is 20 to 80% by mass based on the total mass of the constituent units (A), (B), and (C):

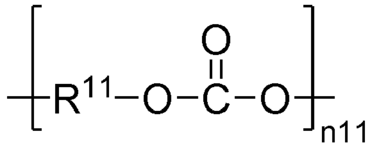
(A)

wherein each $R^{11}$ is independently a linear, branched or cyclic aliphatic hydrocarbon group having 3 to 12 carbon atoms or an aromatic hydrocarbon group having 6 to 12 carbon atoms, and a plurality of $R^{11}$ moieties are the same as or different from each other; and n11 is an arbitrary integer of 1 to 60 and is the total number of the constituent unit of the formula (A) contained in one carbonate group-containing polyol molecule,

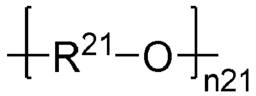
(B)

wherein each $R^{21}$ is independently a linear, branched or cyclic aliphatic hydrocarbon group having 2 to 20 carbon atoms or an aromatic hydrocarbon group having 6 to 20 carbon atoms, and a plurality of $R^{21}$ moieties are the same as or different from each other; and n21 is an arbitrary integer of 2 to 80 and is the total number of the constituent unit of the formula (B) contained in one carbonate group-containing polyol molecule,

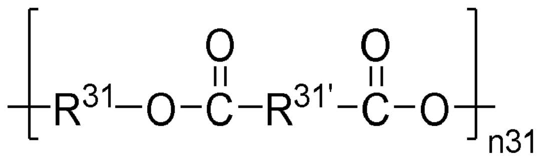
(C)

wherein $R^{31}$ and $R^{31'}$ are each independently a linear, branched or cyclic aliphatic hydrocarbon group having 3 to 12 carbon atoms or an aromatic hydrocarbon group having 6 to 12 carbon atoms, and a plurality of $R^{31}$ or $R^{31'}$ moieties are the same as or different from each other; and n31 is an arbitrary integer of 1 to 60 and is the total number of the constituent unit of the formula (C) contained in one carbonate group-containing polyol molecule.

[2] The carbonate group-containing polyol according to [1], wherein
a content of the constituent unit (B) in the carbonate group-containing polyol is 1.0 to 80% by mass based on the total mass of the constituent units (A), (B), and (C).

[3] The carbonate group-containing polyol according to [1] or [2], wherein
a content of the constituent unit (C) in the carbonate group-containing polyol is 1 to 40% by mass based on the total mass of the constituent units (A), (B), and (C).

[4] The carbonate group-containing polyol according to any one of [1] to [3], wherein a content of the constituent unit (C) is 0.1% to 80% by mass based on a content of the constituent unit (B).

[5] The carbonate group-containing polyol according to any one of [1] to [4], wherein
in the constituent unit (A), each $R^{11}$ is independently a linear aliphatic hydrocarbon group having 3 to 10 carbon atoms or a branched aliphatic hydrocarbon group having 3 to 10 carbon atoms.

[6] The carbonate group-containing polyol according to any one of [1] to [5], wherein
in the constituent unit (B), each $R^{21}$ is independently a linear aliphatic hydrocarbon group having 2 to 4 carbon atoms or a branched aliphatic hydrocarbon group having 3 to 6 carbon atoms.

[7] The carbonate group-containing polyol according to any one of [1] to [6], wherein
in the constituent unit (C), each $R^{31}$ is independently, a linear aliphatic hydrocarbon group having 3 to 10 carbon atoms or a branched aliphatic hydrocarbon group having 3 to 10 carbon atoms.

[8] The carbonate group-containing polyol according to any one of [1] to [7], wherein in the constituent unit (C), each $R^{31'}$ is independently an aromatic hydrocarbon group having 6 to 12 carbon atoms.

[9] The carbonate group-containing polyol according to any one of [1] to [8], wherein
the carbonate group-containing polyol has a viscosity of 100 to 5000 mPa·s as measured at 50°C using a rotational viscometer (type E viscometer (manufactured by Toki Sangyo Co., Ltd., TVE-22HT, cone: No. 6)).

[10] A polyurethane resin composition obtained by reacting

the carbonate group-containing polyol according to any one of [1] to [9] with a compound having an isocyanate group.
[11] Artificial leather comprising
the polyurethane resin composition according to [10].
[12] A leather-like sheet comprising
the polyurethane resin composition according to [10].

It has been found that the carbonate group-containing polyol of the present invention has low viscosity and excellent handleability, and an excellent in low-temperature flexibility and moist heat resistance can be produced by using the carbonate group-containing polyol of the present invention.

DETAILED DESCRIPTION OF THE PREFERRED EMBODIMENT

Hereinafter, the mode for carrying out the present invention (hereinafter, referred to as the "present embodiment") will be described in detail. The present invention is not limited by the embodiment given below and can be carried out by making various changes or modifications therein without departing from the spirit of the present invention.

<Carbonate group-containing polyol>

The carbonate group-containing polyol of the present embodiment has a number-average molecular weight of 300 to 10000 and comprises the following constituent units (A), (B), and (C), wherein a content of the constituent unit (A) is 20 to 80% by mass based on the total mass of the constituent units (A), (B), and (C).
The constituent unit (A) is a constituent unit represented by the following formula (A):

wherein each $R^{11}$ is independently a linear, branched or cyclic aliphatic hydrocarbon

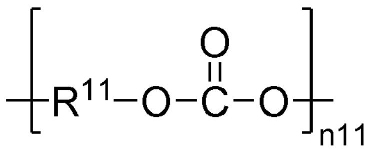
(A)

group having 3 to 12 carbon atoms or an aromatic hydrocarbon group having 6 to 12 carbon atoms, and a plurality of $R^{11}$ moieties are the same as or different from each other; and n11 is an arbitrary integer of 1 to 60 and is the total number of the constituent unit of the formula (A) contained in one carbonate group-containing polyol molecule.

The constituent unit (B) is a constituent unit represented by the following formula (B):

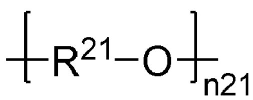
(B)

wherein each $R^{21}$ is independently a linear, branched or cyclic aliphatic hydrocarbon group having 2 to 20 carbon atoms or an aromatic hydrocarbon group having 6 to 20 carbon atoms, and a plurality of $R^{21}$ moieties are the same as or different from each other; and n21 is an arbitrary integer of 2 to 80 and is the total number of the constituent unit of the formula (B) contained in one carbonate group-containing polyol molecule.
The constituent unit (C) is a constituent unit represented by the following formula (C):

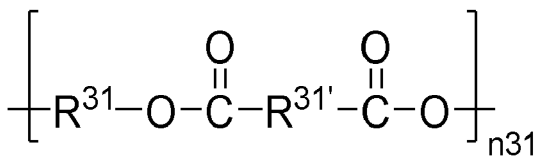
(C)

wherein $R^{31}$ and $R^{31'}$ are each independently a linear, branched or cyclic aliphatic hydrocarbon group having 3 to 12 carbon atoms or an aromatic hydrocarbon group having 6 to 12 carbon atoms, and a plurality of $R^{31}$ or $R^{31'}$ moieties are the same as or different from each other; and n31 is an arbitrary integer of 1 to 60 and is the total number of the constituent unit of the formula (C) contained in one carbonate group-containing polyol molecule.

The carbonate group-containing polyol of the present embodiment thus containing predetermined amounts of the constituent unit (A), the constituent unit (B), and the constituent unit (C) in the molecule has low viscosity of polyol itself, is capable of reducing the amount of a solvent used at the time of coating material or polyurethane production, and in addition, can provide polyurethane excellent in low-temperature flexibility and excellent in moist heat resistance. By contrast, polyols independently comprising the constituent units (A), (B), and (C), respectively, when merely blended, are separated without being uniformly dissolved, are not stable in viscosity, and find difficulty in handleability.
In the present embodiment, the structure of the constituent unit (A), (B) and (C) can be confirmed by a method described in Examples mentioned later.
In the carbonate group-containing polyol of the present embodiment, the terminal structure is a terminal structure where one of the ends is bonded to a carbonate group, and the other end is bonded to a hydroxy group; a terminal structure where both ends are bonded to carbonate groups; or a terminal structure where both ends are bonded to hydroxy groups.
In the carbonate group-containing polyol of the present embodiment, the terminal structure may be a combination of a terminal structure where one of the ends is bonded to a carbonate group, and the other end is bonded to a hydroxy group; and a terminal structure where both ends are bonded to carbonate groups.
Examples of the method for obtaining the carbonate group-containing polyol of the present embodiment include, but are not particularly limited to, methods (i) and (ii) given below. Further details will be specifically described in Examples mentioned later.

(i) A method of performing transesterification reaction using a compound having a constituent unit represented by the formula (A), a compound having a constituent unit represented by the formula (B), and a compound having a constituent unit represented by the formula (C).
(ii) A method of mixing a carbonate compound mentioned later with a polyol starting material that satisfies the constituent unit (A), a compound having the constituent unit (B), and a compound having the constituent unit (C), reacting these materials at 100 to 200°C under atmospheric pressure or reduced pressure in the presence of a transesterification catalyst, and removing the formed alcohol derived from the carbonate starting material to obtain a carbonate group-containing polyol having a predetermined molecular weight.

In obtaining the carbonate group-containing polyol of the present embodiment through synthesis reaction, the reaction is usually carried out by the addition of a catalyst. The catalyst used in the present embodiment can be freely selected from a usual transesterification reaction catalyst. Examples of the transesterification reaction catalyst used include, but are not particularly limited to, metals such as lithium, sodium, potassium, rubidium, cesium, magnesium, calcium, strontium, barium, zinc, aluminum, titanium, cobalt, germanium, tin, lead, antimony, arsenic, and cerium, salts, alkoxide, and organic compounds. A compound of titanium, magnesium, tin, or lead is particularly preferred. The amount of the catalyst used may be 0.00001 to 0.1% by mass based on the mass of carbonate group-containing polyol.
Hereinafter, the carbonate group-containing polyol of the present embodiment will be described in detail.

<Number-average molecular weight>

The number-average molecular weight of the carbonate group-containing polyol of the present embodiment is 300 to 10000, preferably 400 to 5000, more preferably 700 to 3500. When the number-average molecular weight of the carbonate group-containing polyol is 300 or higher, the low-temperature flexibility of polyurethane obtained using the carbonate group-containing polyol is improved. When the number-average molecular weight of the carbonate group-containing polyol is 10000 or lower, the moist heat resistance of polyurethane obtained using the carbonate group-containing polyol is improved.
Examples of the method for controlling the number-average molecular weight of the carbonate group-containing polyol of the present embodiment within the range described above include, but are not particularly limited to, a method using a constituent unit (A), a constituent unit (B), and a constituent unit (C) having a number-average molecular weight controlled within the range described above, and a method of performing the reaction of the method (ii) while confirming the number-average molecular weight, and terminating the reaction when the number-average molecular weight reached the range described above.
In the present embodiment, the number-average molecular weight of the carbonate group-containing polyol can be calculated from the hydroxy value of the carbonate group-containing polyol by use of a method described in Examples mentioned later.

<Constituent unit (A)>

The constituent unit (A) of the carbonate group-containing polyol of the present embodiment is a constituent

unit represented by the formula (A). The constituent unit (A) may be continuously arranged or may be randomly arranged with other constituent units.

In the formula (A), each $R^{11}$ is independently a linear, branched, or cyclic aliphatic hydrocarbon group having 3 to 12 carbon atoms or an aromatic hydrocarbon group having 6 to 12 carbon atoms. A plurality of $R^{11}$ moieties are the same as or different from each other.

The linear aliphatic hydrocarbon group represented by $R^{11}$ has 3 to 12, preferably 3 to 11, more preferably 3 to 10 carbon atoms.

Specific examples of the linear aliphatic hydrocarbon group represented by $R^{11}$ include, but are not particularly limited to, a trimethylene group, a tetramethylene group, a pentamethylene group, a hexamethylene group, a heptylene group, an octamethylene group, a nonabutylene group, and a decabutylene group.

The branched aliphatic hydrocarbon group represented by $R^{11}$ has 3 to 12, preferably 3 to 11, more preferably 3 to 10 carbon atoms.

Specific examples of the divalent branched aliphatic hydrocarbon group represented by $R^{11}$ include, but are not particularly limited to, an isopropylene group, an isobutylene group, a tert-butylene group, an isopentylene group, a tert-pentylene group, a 2,2-dimethyltrimethylene group, an isohexylene group, a 2-methylpentylene group, a 3-methylpentylene group, an isoheptylene group, an isooctylene group, an isononylene group, a 2,4-diethylpentylene group, a 2-butyl-2-ethylpropylene group, and an isodecylene group.

The cyclic aliphatic hydrocarbon group represented by $R^{11}$ has 3 to 12, preferably 6 to 12, more preferably 6 to 10 carbon atoms.

Specific examples of the cyclic aliphatic hydrocarbon group represented by $R^{11}$ include, but are not particularly limited to, a cyclobutylene group, a cyclopentylene group, a cyclohexylene group, and a cyclooctylene group.

The aromatic hydrocarbon group represented by $R^{11}$ has 6 to 12, preferably 6 to 10, more preferably 6 carbon atoms.

Specific examples of the aromatic hydrocarbon group represented by $R^{11}$ include, but are not particularly limited to, a phenylene group and a naphthylene group.

Among others, each $R^{11}$ is independently, preferably, a linear aliphatic hydrocarbon group having 3 to 10 carbon atoms or a branched aliphatic hydrocarbon group having 3 to 10 carbon atoms, more preferably a linear aliphatic hydrocarbon group having 4 to 6 carbon atoms or a branched aliphatic hydrocarbon group having 3 to 6 carbon atoms, still more preferably a linear aliphatic hydrocarbon group such as a butylene group, a pentylene group, or a hexylene group, or a branched aliphatic hydrocarbon group such as an isobutylene group or a 3-methylpentylene group.

At least a portion of the carbonate group-containing polyol of the present embodiment preferably has a constituent unit (A) wherein $R^{11}$ is at least two or more selected from the group consisting of a linear aliphatic hydrocarbon group having 3 to 12 carbon atoms and a branched aliphatic hydrocarbon group having 3 to 12 carbon atoms, more preferably at least two or more selected from the group consisting of a linear aliphatic hydrocarbon group such as a butylene group, a pentylene group, or a hexylene group, and a branched aliphatic hydrocarbon group such as an isobutylene group or 3-methylpentylene group. In this case, a carbonate group-containing polyol that is liquid at ordinary temperature tends to be obtained.

When $R^{11}$ is a 2,2-dimethyltrimethylene group, the constituent unit (A) is represented by, for example, the following formula (H):

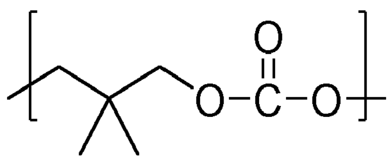

(H)

When $R^{11}$ is an isobutylene group, the constituent unit (A) is represented by, for example, the following formula (I):

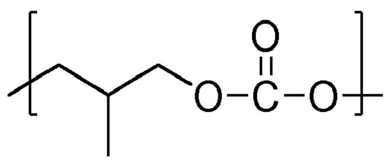

(I)

When $R^{11}$ is an isoheptylene group, the constituent unit (A) is represented by, for example, the following formula (J):

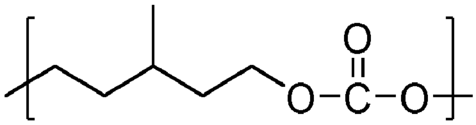 (J)

In the present embodiment, the composition of $R^{11}$ in the constituent unit (A) in the carbonate group-containing polyol can be determined by the following method.

First, 1 g of a sample is weighed into a 100 ml eggplant-shaped flask, in which 30 g of ethanol and 4 g of potassium hydroxide are then placed to obtain a mixture. The obtained mixture is heated for 1 hour in an oil bath of 100°C. The mixture is cooled to room temperature. Then, one to two drops of phenolphthalein are added as an indicator to the mixture, which is then neutralized with hydrochloric acid. Then, the mixture is cooled in a refrigerator for 3 hours, and a precipitated salt is filtered off, followed by the analysis of the filtrate by gas chromatography (hereinafter, referred to as GC) under analysis conditions given below. The composition of $R^{11}$ in the constituent unit (A) in the carbonate group-containing polyol can be determined on the basis of the area value of a diol compound obtained by the GC analysis.

In the present embodiment, $R^{11}$ in the constituent unit (A) and $R^{31}$ in the constituent unit (C) in the carbonate group-containing polyol can be regarded as having the same composition because these moieties are randomly located through diol transesterification as transesterification reaction proceeds.

(n11)

In the formula (A), n11 represents the number of repeats of the carbonate structure. n11 is an arbitrary integer of 1 to 60 and is the total number of each structural unit of the formula (A) contained in one carbonate group-containing polyol molecule. The average value of n11 in the whole carbonate group-containing polyol of the present embodiment is preferably 1 to 50, more preferably 2 to 50, further preferably 2 to 30, particularly preferably 3 to 20. When the average value of n11 is 2 or larger, polyurethane much superior in durability such as moist heat resistance tends to be obtained. When the average value of n11 in the whole carbonate group-containing polyol of the present embodiment is 50 or smaller, the viscosity of the carbonate group-containing polyol tends to be lower viscosity.

A method for measuring n11 described above is not particularly limited, and n11 can be determined, for example, by isolating the starting material diol component, if necessary, through the alkali decomposition of the carbonate group-containing polyol, and subjecting the component to GC-MS measurement, LC-MS measurement, NMR measurement and GPC measurement.

A method for adjusting $R^{11}$ in the constituent unit (A) is not particularly limited, and $R^{11}$ can be adjusted, for example, by changing the composition of polyol for use as a starting material of the constituent unit (A). More specifically, the carbon atoms of $R^{11}$ can be increased, for example, by increasing the carbon atoms of the polyol used.

A method for adjusting n11 in the constituent unit (A) is not particularly limited, and n11 can be adjusted, for example, by changing the amount of polyol used as a starting material of the constituent unit (A). More specifically, n11 can be increased, for example, by increasing the ratio of the starting material polycarbonate diol serving as a source of the constituent unit (A).

The constituent unit (A) can be obtained, for example, but not particularly limited to, by reacting each polyol as shown below with a carbonate compound typified by ethylene carbonate, dimethyl carbonate, diethyl carbonate, or diphenyl carbonate. The method for reacting these compounds is not particularly limited.

One example of the method for reacting these compounds includes, but is not particularly limited to, a method of mixing the carbonate compound mentioned above with polyol mentioned later, reacting these materials at 100 to 200°C under atmospheric pressure or reduced pressure in the presence of a transesterification catalyst, and removing the formed alcohol derived from the carbonate compound to obtain low-molecular-weight polycarbonate polyol, followed by heating at 160 to 250°C under reduced pressure so that the low-molecular-weight polycarbonate polyol is condensed while an unreacted carbonate compound and polyol are removed.

Examples of the polyol starting material that forms the constituent unit (A) include, but are not particularly limited to, diol having no side chain, such as ethylene glycol, 1,3-propanediol, 1,4-butanediol, 1,5-pentanediol, 1,6-hexanediol, 1,7-heptanediol, 1,8-octanediol, 1,9-nonanediol, 1,10-decanediol, 1,11-undecanediol, 1,12-dodecanediol, and 1,14-tetradecanediol, diol having a side chain, such as 2-methyl-1, 8-octanediol, 2-ethyl-1,6-hexanediol, 2-methyl-1,3-propanediol, 3-methyl-1,5-pentanediol, 2,4-dimethyl-1,5-pentanediol, 2,4-diethyl-1, 5-pentanediol, 2-butyl-2-ethyl-1,3-propanediol, and 2,2-dimethyl-1,3-propanediol, and cyclic diol such as 1,4-cyclohexanedimethanol and 2-bis(4-hydroxycyclohexyl)-propane, one type or two or more types of which can be used.

A compound having three or more hydroxyl groups in one molecule, for example, trimethylolethane, trimethylolpropane, hexanetriol, pentaerythritol, or the like may be used in a small amount. Use of this compound having three or more hydroxyl groups in one molecule in too large an amount might cause gelation through cross-linking during

reaction. Thus, the amount of the compound having three or more hydroxyl groups in one molecule is preferably 0.01 to 5% by mass, more preferably 0.01 to 1% by mass, based on the total amount of aliphatic diol and/or alicyclic diol.

The starting material of the constituent unit (A) used in the present embodiment is preferably 1,3-propanediol, 1,4-butanediol, 1,5-pentanediol, 1,6-hexanediol, 1,7-heptanediol, 1,8-octanediol, 1,9-nonanediol, 1,10-decanediol, 2-methyl-1,3-propanediol, or 3-methyl-1,5-pentanediol, particularly preferably 1,3-propanediol, 1,4-butanediol, 1,5-pentanediol, 1,6-hexanediol, 1,9-nonanediol, 1,10-decanediol, 2-methyl-1,3-propanediol, or 3-methyl-1,5-pentanediol.

In the carbonate group-containing polyol of the present embodiment, the content of the constituent unit (A) is 20 to 80% by mass, preferably 25 to 80% by mass, more preferably 40 to 75% by mass, further preferably 60 to 70% by mass, based on the total mass of the constituent units (A), (B), and (C).

When the content of the constituent unit (A) is 20% by mass or more based on the total mass of the constituent units (A), (B) and (C), the moist heat resistance of polyurethane obtained using the carbonate group-containing polyol is improved. When the content of the constituent unit (A) is 80% by mass or less based on the total mass of the constituent unit (A), (B) and (C), the low-temperature flexibility of polyurethane obtained using the carbonate group-containing polyol is improved.

In the present embodiment, the content of the constituent unit (A) can be adjusted by changing the mixing ratio among a compound having the constituent unit (A), a compound having the constituent unit (B), and a compound having the constituent unit (C). The content of the constituent unit (A) can be measured by a method described in Examples mentioned later.

<Constituent unit (B)>

The constituent unit (B) of the carbonate group-containing polyol of the present embodiment is a constituent unit represented by the formula (B). The constituent unit (B) may be continuously arranged or may be randomly arranged with other constituent units.

$(R^{21})$

In the formula (B), each $R^{21}$ is independently a linear, branched, or cyclic aliphatic hydrocarbon group having 2 to 20 carbon atoms or an aromatic hydrocarbon group having 6 to 20 carbon atoms. A plurality of $R^{21}$ moieties are the same as or different from each other.

The linear aliphatic hydrocarbon group represented by $R^{21}$ has 2 to 20, preferably 2 to 12, more preferably 2 to 6, further preferably 2 to 4 carbon atoms.

Specific examples of the linear aliphatic hydrocarbon group represented by $R^{21}$ include, but are not particularly limited to, an ethylene group, a trimethylene group, a tetramethylene group, a pentamethylene group, a hexamethylene group, a heptylene group, and an octylene group.

The branched aliphatic hydrocarbon group represented by $R^{21}$ has 3 to 20, preferably 3 to 12, more preferably 3 to 6 carbon atoms.

Specific examples of the branched aliphatic hydrocarbon group represented by $R^{21}$ include, but are not particularly limited to, an isopropylene group, an isobutylene group, a tert-butylene group, an isopentylene group, a 2,2-dimethyltrimethylene group, an isohexylene group, an isoheptylene group, and an isooctylene group.

When $R^{21}$ is an isopropylene group, the constituent unit (B) is represented by, for example, the following formula (M) or the following formula (N):

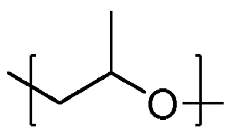 (M)

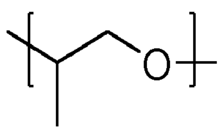 (N)

The cyclic aliphatic hydrocarbon group represented by $R^{21}$ has 6 to 20, preferably 6 to 12, more preferably 6 to 8 carbon atoms.

Specific examples of the cyclic aliphatic hydrocarbon group represented by $R^{21}$ include, but are not particularly

limited to, a cyclobutylene group, a cyclopentylene group, a cyclohexylene group, and a cycloheptylene group.

The aromatic hydrocarbon group represented by $R^{21}$ has 6 to 15, preferably 6 to 12, more preferably 6 to 10 carbon atoms.

Specific examples of the aromatic hydrocarbon group represented by $R^{21}$ include, but are not particularly limited to, a phenylene group and a naphthylene group.

Among others, each $R^{21}$ is independently, preferably, a linear, branched, or cyclic aliphatic hydrocarbon group having 2 to 20 carbon atoms (i.e., an alkylene group), more preferably a linear aliphatic hydrocarbon group having 2 to 6 carbon atoms or a branched aliphatic hydrocarbon group having 3 to 6 carbon atoms, further preferably a linear aliphatic hydrocarbon group having 2 to 4 carbon atoms or a branched aliphatic hydrocarbon group having 3 to 6 carbon atoms. Particularly, when $R^{21}$ contains a branched aliphatic hydrocarbon group, polyurethane much superior in low-temperature characteristics and durability such as moist heat resistance tends to be obtained.

In the formula (B), n21 represents the number of repeats. In the formula (B), n21 is an arbitrary integer of 2 to 80 and is the total number of each structural unit of the formula (B) contained in one carbonate group-containing polyol molecule. The average value of n21 in the whole carbonate group-containing polyol of the present embodiment is 2 or larger, preferably in the range of 12 to 70, more preferably in the range of 12 to 60, particularly preferably in the range of 15 to 50. When the average value of n21 is 2 or larger, polyurethane much superior in flexibility and low-temperature flexibility tends to be obtained. When the average value of n21 in the whole carbonate group-containing polyol of the present embodiment is 70 or smaller, the viscosity of the carbonate group-containing polyol tends to be lower viscosity.

n21 described above can be determined, for example, by isolating the starting material diol component, if necessary, through the alkali decomposition of the carbonate group-containing polyol, and subjecting the component to GC-MS measurement, LC-MS measurement, NMR measurement and GPC measurement.

Among others, the constituent unit (B) represented by the formula (B) is preferably a polyoxyalkylene structure.

Specific examples of the preferred oxyalkylene group contained in the formula (B) include, but are not particularly limited to, an oxyethylene group, an oxy-1-methylethylene group, an oxytetramethylene group, and an oxy-2,2-dimethyltrimethylene group. Among others, a structure containing an oxy-1-methylethylene group is preferred, and an oxy-1-methylethylene group and an oxyethylene group are particularly preferred. When the preferred oxyalkylene group contained in the formula (B) is the structure described above, the carbonate group-containing polyol becomes liquid at ordinary temperature by the introduction of a side chain methyl group and is thus excellent in workability. Furthermore, the resulting polyurethane tends to be rich in flexibility and low-temperature characteristics.

Examples of the starting material that forms the constituent unit (B) include, but are not particularly limited to, polyether polyol. The polyether polyol is not particularly limited as long as the polyether polyol is polyol having an ether bond in the molecule. The polyether polyol is preferably, for example, a compound having an ether-bonded alkylene group obtained by the ring-opening polymerization of cyclic ether or the ring-opening polymerization of an epoxy compound.

The number of carbon atoms in the backbone of the polyether polyol is not particularly limited. The backbone preferably has 2 to 4 carbon atoms from the viewpoint of easy availability. A smaller content of an oxygen atom is more preferred from the viewpoint of suppressing reduction in water resistance caused by the water absorption of polyurethane. Thus, the backbone more preferably has 3 or 4 carbon atoms.

Specific examples of the polyether polyol include, but are not particularly limited to: polytetramethylene ether glycol, polytetramethylene ether glycol having an alkyl side chain, polypropylene glycol, polyethylene glycol, and copolymers of two or more thereof; and random copolymers and block copolymers of ethylene oxide and propylene oxide, and random copolymers and block copolymers of ethylene oxide and butylene oxide. Among others, polytetramethylene ether glycol, polytetramethylene ether glycol having an alkyl side chain, polypropylene glycol, polyethylene glycol, and copolymers of two or more thereof, etc. are preferred.

A method for adjusting $R^{21}$ and n21 in the constituent unit (B) is not particularly limited, and $R^{21}$ and n21 can be adjusted, for example, by appropriately changing a starting material of the constituent unit (B).

In the carbonate group-containing polyol of the present embodiment, the content of the constituent unit (B) is preferably 1.0 to 80% by mass, more preferably 10 to 60% by mass, further preferably 15 to 50% by mass, still further preferably 20 to 40% by mass, based on the total mass of the constituent units (A), (B), and (C).

When the content of the constituent unit (B) is 1.0% by mass or more based on the total mass of the constituent units (A), (B) and (C), moist heat resistance tends to be improved. When the content of the constituent unit (B) is 80% by mass or less based on the total mass of the constituent unit (A), the constituent unit (B), and the constituent unit (C), handleability and low-temperature flexibility tends to be improved.

In the present embodiment, the content of the constituent unit (B) can be adjusted by changing the mixing ratio among a compound having the constituent unit (A), a compound having the constituent unit (B), and a compound having the constituent unit (C). The content of the constituent unit (B) can be measured by a method described in Examples mentioned later.

<Constituent unit (C)>

The constituent unit (C) of the carbonate group-containing polyol of the present embodiment is a constituent unit represented by the formula (C). The constituent unit (C) may be continuously arranged or may be randomly arranged with other constituent units.

($R^{31}$)

In the formula (C), each $R^{31}$ is independently a linear, branched, or cyclic aliphatic hydrocarbon group having 3 to 12 carbon atoms or an aromatic hydrocarbon group having 6 to 12 carbon atoms. A plurality of $R^{31}$ moieties are the same as or different from each other.
The linear aliphatic hydrocarbon group represented by $R^{31}$ has 3 to 12, preferably 6 to 12, more preferably 6 to 10 carbon atoms.
Specific examples of the linear aliphatic hydrocarbon group represented by $R^{31}$ include, but are not particularly limited to, a trimethylene group, a tetramethylene group, a pentamethylene group, a hexamethylene group, a heptylene group, an octamethylene group, a nonabutylene group, and a decabutylene group.
The branched aliphatic hydrocarbon group represented by $R^{31}$ has 3 to 12, preferably 3 to 11, more preferably 3 to 10 carbon atoms.
Specific examples of the divalent branched aliphatic hydrocarbon group represented by $R^{31}$ include, but are not particularly limited to, an isopropylene group, an isobutylene group, a tert-butylene group, an isopentylene group, a tert-pentylene group, a 2,2-dimethyltrimethylene group, an isohexylene group, a 2-methylpentylene group, a 3-methylpentylene group, an isoheptylene group, an isooctylene group, an isononylene group, a 2,4-diethylpentylene group, a 2-butyl-2-ethylpropylene group, and an isodecylene group.
The cyclic aliphatic hydrocarbon group represented by $R^{31}$ has 3 to 12, preferably 6 to 12, more preferably 6 to 10 carbon atoms.
Specific examples of the cyclic aliphatic hydrocarbon group represented by $R^{31}$ include, but are not particularly limited to, a cyclobutylene group, a cyclopentylene group, a cyclohexylene group, and a cyclooctylene group.
The aromatic hydrocarbon group represented by $R^{31}$ has 6 to 12, preferably 6 to 10, more preferably 6 carbon atoms.
Specific examples of the aromatic hydrocarbon group represented by $R^{31}$ include, but are not particularly limited to, a phenylene group and a naphthylene group.
Among others, each $R^{31}$ is independently, preferably, a linear aliphatic hydrocarbon group having 3 to 10 carbon atoms or a branched aliphatic hydrocarbon group having 3 to 10 carbon atoms, more preferably a linear aliphatic hydrocarbon group having 4 to 6 carbon atoms or a branched aliphatic hydrocarbon group having 3 to 6 carbon atoms, still more preferably a linear aliphatic hydrocarbon group such as a butylene group, a pentylene group, or a hexylene group, or a branched aliphatic hydrocarbon group such as an isobutylene group or a 3-methylpentylene group. Particularly, when $R^{31}$ contains a branched aliphatic hydrocarbon group, polyurethane much superior in low-temperature characteristics and durability such as moist heat resistance tends to be obtained.

($R^{31'}$)

In the formula (C), each $R^{31'}$ is independently a linear, branched, or cyclic aliphatic hydrocarbon group having 3 to 12 carbon atoms or an aromatic hydrocarbon group having 6 to 12 carbon atoms. A plurality of $R^{31'}$ moieties are the same as or different from each other.
The linear aliphatic hydrocarbon group represented by $R^{31'}$ has 3 to 12, preferably 6 to 12, more preferably 6 to 10 carbon atoms.
Specific examples of the linear aliphatic hydrocarbon group represented by $R^{31'}$ include, but are not particularly limited to, a trimethylene group, a tetramethylene group, a pentamethylene group, a hexamethylene group, a heptylene group, an octamethylene group, a nonabutylene group, and a decabutylene group.
The branched aliphatic hydrocarbon group represented by $R^{31'}$ has 3 to 12, preferably 3 to 11, more preferably 3 to 10 carbon atoms.
Specific examples of the divalent branched aliphatic hydrocarbon group represented by $R^{31'}$ include, but are not particularly limited to, an isopropylene group, an isobutylene group, a tert-butylene group, an isopentylene group, a tert-pentylene group, a 2,2-dimethyltrimethylene group, an isohexylene group, a 2-methylpentylene group, a 3-methylpentylene group, an isoheptylene group, an isooctylene group, an isononylene group, a 2,4-diethylpentylene group, a 2-butyl-2-ethylpropylene group, and an isodecylene group.
The cyclic aliphatic hydrocarbon group represented by $R^{31'}$ has 3 to 12, preferably 6 to 12, more preferably 6 to 10 carbon atoms.

Specific examples of the cyclic aliphatic hydrocarbon group represented by $R^{31'}$ include, but are not particularly limited to, a cyclobutylene group, a cyclopentylene group, a cyclohexylene group, and a cyclooctylene group.

The aromatic hydrocarbon group represented by $R^{31'}$ has 6 to 12, preferably 6 to 10, more preferably 6 carbon atoms.

Specific examples of the aromatic hydrocarbon group represented by $R^{31'}$ include, but are not particularly limited to, a phenylene group and a naphthylene group.

Examples of the phenylene group include, but are not particularly limited to, the following formula (Y)-o, the following formula (Y)-m, and the following formula (Y)-p:

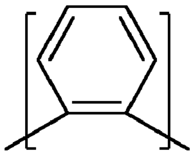

(Y)-*o*

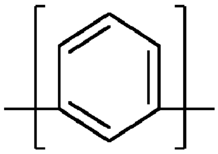

(Y)-*m*

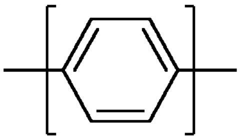

(Y)-*p*

Among others, $R^{31'}$ is preferably a linear aliphatic hydrocarbon group having 3 to 12 carbon atoms, a branched aliphatic hydrocarbon group having 3 to 10 carbon atoms, or an aromatic hydrocarbon group having 6 to 10 carbon atoms, more preferably a hexamethylene group, a phenylene group, or a naphthylene group, still more preferably a phenylene group.

Particularly, when $R^{31'}$ contains an aromatic hydrocarbon group, polyurethane much superior in durability such as moist heat resistance tends to be obtained.

In the formula (C), n31 represents the number of repeats. In the formula (C), n31 is an arbitrary integer of 1 to 60 and is the total number of each structural unit of the formula (C) contained in one carbonate group-containing polyol molecule. The average value of n31 in the whole carbonate group-containing polyol of the present embodiment is 1 or larger, preferably in the range of 2 to 50, more preferably in the range of 3 to 30, particularly preferably in the range of 4 to 25. When the average value of n31 is 2 or larger, polyurethane much superior in flexibility and low-temperature flexibility tends to be obtained. When the average value of n31 in the whole carbonate group-containing polyol of the present embodiment is 50 or smaller, the viscosity of the carbonate group-containing polyol tends to be lower viscosity.

n31 described above can be determined, for example, by isolating the starting material diol component, if necessary, through the alkali decomposition of the carbonate group-containing polyol, and subjecting the component to GC-MS measurement, LC-MS measurement, NMR measurement and GPC measurement.

A method for adjusting $R^{31}$ and n31 in the constituent unit (C) is not particularly limited, and $R^{31}$ and n31 can be adjusted, for example, by appropriately changing a starting material of the constituent unit (C).

Examples of the starting material that forms the constituent unit (C) include, but are not particularly limited to, polyester polyol. The polyester polyol is not particularly limited as long as the polyester polyol is polyol having an ester bond in the molecule. Examples of the polyester polyol include polyester polyol obtained by the condensation of carboxylic acid with a polyhydric alcohol, polyester polyol obtained by the condensation of carboxylic acid ester with a polyhydric alcohol, polyester polyol obtained by the condensation of a mixture of carboxylic acid and carboxylic acid ester with a polyhydric alcohol, polyester polyol obtained by the ring-opening polymerization of cyclic ester, and polyester polyol obtained by the condensation of hydroxycarboxylic acid with a polyhydric alcohol,

Specific examples of the polyester polyol include, but are not particularly limited to, polyethylene adipate diol, polypropylene adipate diol, polybutylene adipate diol, polypentylene adipate diol, polyhexylene adipate diol, polyethylene butylene adipate diol, polyhexamethylene isophthalate adipate diol, polyethylene succinate diol, polybutylene succinate diol, polyethylene sebacate diol, polybutylene sebacate diol, poly(3-methyl-1,5-pentylene adipate) diol, polyethylene phthalate diol, polypropylene phthalate diol, polybutylene phthalate diol, polypentylene phthalate diol, polyhexylene phthalate diol, polyethylene butylene phthalate diol, poly(3-methyl-1,5-pentylene phthalate) diol, polyethylene isophthalate diol, polypropylene isophthalate diol, polybutylene isophthalate diol, polypentylene isophthalate diol, polyhexylene isophthalate diol, polyethylene butylene isophthalate diol, poly(3-methyl-1,5-pentylene isophthalate) diol, polyethylene terephthalate diol, polypropylene terephthalate diol, polybutylene terephthalate diol, polypentylene terephthalate diol, polyhexylene terephthalate diol, polyethylene butylene terephthalate diol, poly(3-methyl-1,5-pentylene terephthalate) diol, polyethylene naphthalate diol, polypropylene naphthalate diol, polybutylene naphthalate diol, polypentylene naphthalate diol, polyhexylene naphthalate diol, polyethylene butylene naphthalate diol, poly(3-methyl-1,5-pentylene naphthalate) diol, poly-γ-butyrolactone diol, poly-6-valerolactone diol, poly-ε-caprolactone diol, and polycondensates of 1,6-hexanediol and dimeric acid. Among them, polybutylene phthalate diol, polypentylene phthalate diol, polyhexylene phthalate diol, polyethylene butylene phthalate diol, poly(3-methyl-1,5-pentylene phthalate) diol, polybutylene isophthalate diol, polypentylene isophthalate diol, polyhexylene isophthalate diol, polyethylene butylene isophthalate diol, poly(3-methyl-1,5-pentylene isophthalate) diol, polybutylene terephthalate diol, polypentylene terephthalate diol, polyhexylene terephthalate diol, polyethylene butylene terephthalate diol, and poly(3-methyl-1,5-pentylene terephthalate) diol are preferred.

In the carbonate group-containing polyol of the present embodiment, the content of the constituent unit (C) is preferably 1.0 to 40% by mass, more preferably 3.0 to 30% by mass, further preferably 4.0 to 20% by mass, still further preferably 5.0 to 10% by mass, based on the total mass of the constituent units (A), (B), and (C).

When the content of the constituent unit (C) is 1.0% by mass or more based on the total mass of the constituent units (A), (B) and (C), low-temperature flexibility tends to be improved. When the content of the constituent unit (C) is 40% by mass or less based on the total mass of the constituent units (A), (B) and (C), handleability tends to be improved.

In the carbonate group-containing polyol of the present embodiment, the content of the constituent unit (C) is preferably 1.0 to 40% by mass, more preferably 5.0 to 35% by mass, further preferably 10 to 30% by mass, still further preferably 20 to 25% by mass, based on the content of the constituent unit (B).

When the content of the constituent unit (C) is 5.0% by mass or more based on the content of the constituent unit (B), low-temperature flexibility tends to be improved. When the content of the constituent unit (C) is 40% by mass or less based on the content of the constituent unit (B), handleability tends to be improved.

In the present embodiment, the content of the constituent unit (C) can be adjusted by changing the mixing ratio among a compound having the constituent unit (A), a compound having the constituent unit (B), and a compound having the constituent unit (C). The content of the constituent unit (C) can be measured by a method described in Examples mentioned later.

<Viscosity>

The viscosity of the carbonate group-containing polyol of the present embodiment as measured at 50°C using a rotational viscometer (type E viscometer (manufactured by Toki Sangyo Co., Ltd., TVE-22HT, cone: No. 6)) is preferably 100 to 10000 mPa·s, more preferably 500 to 5000 mPa·s, further preferably 1000 to 2500 mPa·s. When the viscosity of the carbonate group-containing polyol at 50°C is 100 mPa·s or more, the low-temperature flexibility of polyurethane obtained using the carbonate group-containing polyol tends to be improved. When the viscosity of the carbonate group-containing polyol at 50°C is 10000 mPa·s or less, solvent solubility is favorable and handleability tends to be excellent.

Examples of the method for controlling the viscosity of the carbonate group-containing polyol of the present embodiment as measured at 50°C using a rotational viscometer (type E viscometer (manufactured by Toki Sangyo Co., Ltd., TVE-22HT, cone: No. 6)) within the range described above include, but are not particularly limited to, a method of changing the content of the constituent unit (A), and change in structure of the constituent unit (A). In this respect, the viscosity can be decreased by branching the structure of the constituent unit (A).

<Purpose>

The carbonate group-containing polyol of the present embodiment can be used as a starting material of polyurethane obtained through reaction with polyisocyanate. The polyurethane obtained using the carbonate group-containing polyol of the present embodiment is excellent in low-temperature flexibility and moist heat resistance. Therefore, the polyurethane can be widely used in, for example, but not particularly limited to, artificial leather, synthetic leather, foams, elastomers, coating materials, coating agents, pressure-sensitive adhesives, adhesives, and aqueous polyurethane coating materials.

<Polyurethane resin composition>

The polyurethane resin composition of the present embodiment is prepared using the carbonate group-containing polyol mentioned above, a compound having a plurality of isocyanate groups, and at least one chain extender selected from the group consisting of polyol and polyamine.

The method for producing the polyurethane resin composition of the present embodiment employs conventional polyurethanization reaction conditions known in the art.

Examples of the method for producing the polyurethane resin composition of the present embodiment include, but are not particularly limited to, a method of mixing the carbonate group-containing polyol mentioned above, other polyols, polyisocyanate and a chain extender in one lump for reaction (hereinafter, also referred to as a "one-shot method"), and a method of first reacting the carbonate group-containing polyol mentioned above, other polyols and polyisocyanate to prepare a prepolymer having isocyanate groups at both ends, and then reacting the prepolymer with a chain extender (hereinafter, also referred to as a "prepolymer method").

<Compound having isocyanate groups>

The compound having a plurality of isocyanate groups for use in the polyurethane resin composition of the present embodiment is not particularly limited as long as the compound works as a curing agent. An isocyanate compound having two or more or three or more terminal isocyanate groups is used.

Examples of such an isocyanate compound include, but are not particularly limited to, chain aliphatic diisocyanate, cyclic aliphatic diisocyanate, aromatic diisocyanate, and isocyanurate-modified products and biuret-modified products of these isocyanate compounds.

Specific examples of the chain aliphatic diisocyanate include, but are not particularly limited to, hexamethylene diisocyanate and trimethylhexamethylene diisocyanate.

Specific examples of the cyclic aliphatic diisocyanate include, but are not particularly limited to, isophorone diisocyanate.

Specific examples of the aromatic diisocyanate include, but are not particularly limited to, tolylene diisocyanate, 4,4'-diphenylmethane diisocyanate (hereinafter, also abbreviated to "MDI"), xylylene diisocyanate and naphthylene diisocyanate.

Examples of the isocyanate compound having three or more isocyanate groups include, but are not particularly limited to, triphenylmethane-4,4'-4"-triisocyanate, 1,3,5-triisocyanatobenzene, 2,4,6-triisocyanatotoluene and 4,4'-dimethyldiphenylmethane-2,2',5,5'-tetraisocyanate.

A commercially available product may be used as the isocyanate compound used in the present embodiment, or the isocyanate compound may be synthesized by use of a method known in the art.

The amount of the isocyanate compound used can be appropriately adjusted according to the molar quantity of a hydroxy group in the base agent polyol. Specifically, the molar ratio (NCO/OH) of an isocyanate group in the isocyanate compound to a hydroxy group in the polyol (for example, the polycarbonate diol) can be, for example, 0.2 to 5.0, can be, for example, 0.4 to 3.0, and can be, for example, 0.5 to 2.0. When NCO/OH is equal to or more than 0.2, a stronger coating film tends to be obtained. On the other hand, when NCO/OH is equal to or less than 0.5, the smoothness of a coating film tends to be better.

<Chain extender>

Examples of the chain extender for use in producing the polyurethane resin composition of the present embodiment usually include, but are not particularly limited to, polyol and polyamine.

Examples of the polyol include, but are not particularly limited to, linear diol, branched diol, cyclic diol, and diol having an aromatic ring.

Examples of the linear diol include, but are not particularly limited to, ethylene glycol, 1,3-propanediol, 1,5-pentanediol, 1,6-hexanediol, 1,7-heptanediol, 1,8-octanediol, 1,9-nonanediol, 1,10-decanediol, 1,11-undecanediol, and 1,12-dodecanediol.

Examples of the branched diol include, but are not particularly limited to, 2-methyl-1,8-octanediol, neopentyl glycol, 2-ethyl-1,6-hexanediol, 2-methyl-1,3-propanediol, 3-methyl-1,5-pentanediol, 2,4-dimethyl-1,5-pentanediol, and 2,4-diethyl-1,5-pentanediol.

Examples of the cyclic diol include, but are not particularly limited to, 1,3-cyclohexanediol, 1,4-cyclohexanediol, 1,4-cyclohexanedimethanol, and 2-bis(4-hydroxycyclohexyl)-propane.

Examples of the diol having an aromatic ring include, but are not particularly limited to, p-xylenediol, p-tetrachloroxylenediol, 1,4-bis(hydroxyethoxy)benzene, and 2,2-bis[(4-hydroxyethoxy)phenyl]propane.

Examples of the polyamine include, but are not particularly limited to, hydroxyamines and polyamines.

Examples of the hydroxyamines include, but are not particularly limited to, N-methylethanolamine and N-ethylethanolamine.

Examples of the polyamines include, but are not particularly limited to, ethylenediamine, 1,3-diaminopropane, hexamethylenediamine, triethylenetetramine, diethylenetriamine, isophoronediamine, 4,4'-diaminodicyclohexylmethane, 2-hydroxyethylpropylenediamine, di-2-hydroxyethylethylenediamine, di-2-hydroxyethylpropylenediamine, 2-hydroxypropylethylenediamine, di-2-hydroxypropylethylenediamine, 4,4'-diphenylmethanediamine, methylenebis(o-chloroaniline), xylylenediamine, diphenyldiamine, tolylenediamine, hydrazine, piperazine, and N,N'-diaminopiperazine.

These chain extenders may be used singly or may be used in combination of two or more thereof.

<Artificial leather>

The artificial leather of the present embodiment can be formed using the polyurethane resin composition mentioned above. Specifically, the film of the present embodiment can be formed, for example, but not particularly limited to, by applying the polyurethane resin composition mentioned above to a base material, followed by drying.

Examples of the base material include, but are not particularly limited to, fibrous base materials made of nonwoven fabrics, fabrics, knit, or the like, and resin films. Examples of the constituent of the fibrous base material include, but are not particularly limited to: chemical fibers such as polyester fibers, nylon fibers, acrylic fibers, polyurethane fibers, acetate fibers, rayon fibers, and polylactic acid fibers; and cotton, linen, silk, wool, and blend fibers thereof. Examples of the resin film include, but are not particularly limited to, polyethylene terephthalate films, polycarbonate films, acrylic resin films, COP (cycloolefin polymer) films, and TAC (triacetylcellulose) films.

The surface of the base material may be treated, if necessary, by antistatic processing, mold release processing, water repelling processing, water absorption processing, antimicrobial deodorization processing, antibacterial processing, ultraviolet blocking processing, or the like.

Examples of the method for applying the polyurethane resin composition mentioned above to the base material include, but are not particularly limited to, application methods using applicators, bar coaters, knife coaters, T-die coaters, roll coaters, or the like.

Examples of the method for drying the applied polyurethane resin composition include a method of performing drying at a temperature of 50 to 140°C for 30 seconds to 10 minutes.

The thickness of the film of the present embodiment is appropriately determined according to the purpose used and is, for example, in the range of 0.001 to 10 mm.

<Leather-like sheet>

The leather-like sheet of the present embodiment is a multilayer sheet and has the film mentioned above as at least one layer. For preparing the leather-like sheet using the film mentioned above, it is preferred that the film should serve as at least any of an adhesive layer, a surface layer, and a surface-treated layer of the leather-like sheet.

Examples of the method for producing the leather-like sheet of the present embodiment include, but are not particularly limited to, a method of laminating a surface-treated layer formed on a release paper with the film mentioned above by a conventional method known in the art. Examples of the material that forms the surface-treated layer include, but are not particularly limited to, solvent-based urethane resin, aqueous urethane resin, and aqueous acrylic resin. In the lamination, an conventional adhesive known in the art may be used, if necessary.

As described above, the carbonate group-containing polyol of the present embodiment can provide a polyurethane resin composition excellent in low-temperature flexibility, moist heat resistance, etc. Accordingly, such a polyurethane resin composition can be suitably used as a material for use in the production of leather-like sheets such as synthetic leather and artificial leather, apparel, support pads, and polishing pads, and can be particularly suitably used as a material for leather-like sheets.

EXAMPLES

Hereinafter, the present embodiment will be described in more detail with reference to Examples, etc. However, the present embodiment is not limited by these examples by any means. Analysis methods and physical property evaluation in Examples, Comparative Examples, Application Examples and Application Comparative Examples given below were carried out by the following testing methods. Each polyol described below is a carbonate group-containing polyol prepared in Examples, polyether polyol and polyester polyol serving as starting materials, polycarbonate diol prepared in Synthesis Examples, etc.

<Appearance>

The appearance of each polyol obtained in Examples mentioned later was determined by collecting 30 mL of a sample into a 50 mL sample bottle and visually observing its appearance at room temperature (25°C).

<Hydroxy value>

The hydroxy value of each polyol was measured by the following method.

First, a volumetric flask was used, and pyridine was added to 12.5 g of acetic anhydride so as to bring the amount to 50 mL, to prepare an acetylation reagent. Subsequently, in a 100 mL eggplant-shaped flask, 2.5 g of a sample was weighed. Subsequently, to the eggplant-shaped flask, 5 mL of the acetylation reagent and 10 mL of toluene were added with a whole pipette. Then, a condenser was attached to the flask, and the solution in the eggplant-shaped flask was stirred and heated at 100°C for 1 hour. Subsequently, to the eggplant-shaped flask, 2.5 mL of distilled water was added with a whole pipette, and then, the solution in the eggplant-shaped flask was further heated and stirred for 10 minutes. After cooling of the solution in the eggplant-shaped flask for 2 to 3 minutes, to the eggplant-shaped flask, 12.5 mL of ethanol was added. Subsequently, to the eggplant-shaped flask, 2 to 3 drops of phenolphthalein were added as an indicator, followed by titration with 0.5 mol/L ethanolic potassium hydroxide. Subsequently, in a 100 mL eggplant-shaped flask, 5 mL of the acetylation reagent, 10 mL of toluene and 2.5 mL of distilled water were placed, and the solution in the eggplant-shaped flask was heated and stirred for 10 minutes, followed by titration in the same way as above (blank test). On the basis of the results, the hydroxy value of each polyol was calculated according to the following expression (i):

$$\text{Hydroxy value (mgKOH/g)} = \{(F - E) \times 28.05 \times f\} / G \ldots \text{(i)}$$

In the expression (i), E represents the amount of the sample titrated (mL); F represents the amount titrated (mL) in the blank test; G represents the mass of the sample (g); and f represents the factor of the titration solution.

<Number-average molecular weight>

The number-average molecular weight of each polyol obtained in each of Synthesis Examples mentioned later was calculated from the hydroxy value determined by the method mentioned above according to the following expression (ii):

$$\text{Number-average molecular weight (A)} = 2 / (H \times 10\text{-}3 / 56.11) \ldots \text{(ii)}$$

In the expression (ii), H represents the hydroxy value (mgKOH/g) of each polyol.

<Measurement of viscosity>

Each polyol obtained in Examples mentioned later was heated to 50°C in advance, and its melt viscosity was then measured at 50°C using a rotational viscometer (type E viscometer (manufactured by Toki Sangyo Co., Ltd., TVE-22HT, cone: No. 6)). Lower viscosity was evaluated as better handleability.

(Evaluation criteria)

◎: Viscosity of less than 2500 mPa·s.
○: Viscosity of 2500 mPa·s or more and less than 5000 mPa·s.
△: Viscosity of 5000 mPa·s or more and less than 10000 mPa·s.
×: Viscosity of 10000 mPa·s or more.
×: Nonuniform compound appearance and an unstable measured value of viscosity at ordinary temperature.

<Content of constituent unit (A)>

The identification of the type of a starting material component and the calculation of a molar ratio thereof were performed by isolating the starting material component (diol component) through the alkali decomposition of a carbonate group-containing polyol, and subjecting the component to GC-MS measurement, LC-MS measurement, and GPC measurement. Subsequently, the average molecular weight of $R^{11}$ was calculated from the type and molar ratio of the starting material component, and the average molecular weight of the constituent unit (A) was determined on the basis thereof. Next, the carbonate group-containing polyol was dissolved in deuterated chloroform and measured by $^{1}$H-NMR (AL-400 manufactured by JEOL Ltd., 400 MHz) to calculate an average number of repeats of the constituent unit (A).

Then, the content of the constituent unit (A) was calculated according to the following expression.

Content of the constituent unit (A) = (Molecular weight (g/mol) of the constituent unit (A)) × The number of repeats of the carbonate structure × Starting material polycarbonate diol (mol)) / Total weight (g) of added polyol

In this context, the structure of the constituent unit (A) is as shown below. The starting material polycarbonate diol is, for example, polycarbonate diol described in each Example. The total weight of added polyol is, for example, the total weight of polycarbonate diol (P-1), polyether polyol (PE-61), and polyester polyol (P-2030) described in each Example.

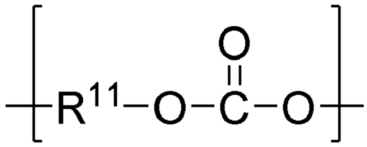

<Handleability (solvent solubility) of polyol composition>

A "polyol composition" and N,N-dimethylformamide (DMF) were added at each ratio shown in Application Examples and Application Comparative Examples mentioned later to 250 mL IBOY and then dissolved using a shaker (Labo Shaker (manufactured by AS ONE Corp., SHAKER SR-1, 80 rpm), and the time to complete dissolution was measured. A shorter measured time was evaluated as better handleability.

(Evaluation criteria)

○: Dissolved in a time of shorter than 5 minutes.
△: Dissolved in a time of 5 minutes or longer and shorter than 10 minutes.
×: Dissolved in a time of 10 minutes or longer.

<Molecular weight of polyurethane film>

A portion of a polyurethane film obtained in each of Application Examples and Application Comparative Examples mentioned later was cut out, and a N,N-dimethylformamide solution was prepared so as to have a polyurethane concentration of 0.1% by mass. The number-average molecular weight (Mn) based on standard polystyrene was measured using a GPC apparatus [manufactured by Tosoh Corp., product name "HLC-8320" (column: Tskgel SuperHM-H, 4 columns); a solution containing 2.6 g lithium bromide dissolved in 1 L of N,N-dimethylformamide was used as an eluent].

<Low-temperature flexibility (glass transition temperature) of polyurethane film>

A test specimen having a width of 10 mm, a length of 40 mm, and a thickness of 0.4 mm was cut out of a polyurethane film obtained in each of Application Examples and Application Comparative Examples mentioned later. The test specimen was loaded at a distance between chucks of 20 mm in a viscoelasticity measurement apparatus (manufactured by Hitachi High-Tech Science Corp., [TA7000 series, DMA7100]). Viscoelasticity was measured while the temperature was elevated from -100°C to 100°C at 5°C/min. The peak of tanδ was read to determine a glass transition temperature (Tg) as an index for the low-temperature flexibility of the polyurethane film. A lower glass transition temperature (Tg) was evaluated as better low-temperature flexibility.

(Evaluation criteria)

◎: Tg of lower than -15°C.
○: Tg of -15°C or higher and lower than -10°C.
△: Tg of -10°C or higher and lower than -3°C.
×: Tg of -3°C or higher.

<Moist heat resistance of polyurethane film>

A strip of a polyurethane test specimen having a width of 10 mm, a length of 100 mm, and a thickness of

approximately 0.5 mm was heated at a temperature of 85°C and a humidity of 85% for 500 hours in Unicool (manufactured by ESPEC Corp., product name "Platinous, model PR-1J") in accordance with JIS K6301 (2010). The sample thus heated was subjected to a tensile test at a temperature of 23°C (relative humidity: 55%) under conditions of a distance between chucks of 20 mm and a pulling rate of 100 mm/min using a tensile tester (manufactured by Orientec Co., Ltd., product name "Tensilon, model RTE-1210"). The stress at 100% elongation, strength at break, and elongation at break of the test specimen were measured.

(Evaluation Criteria)

As compared with the retention of tensile strength at ordinary temperature

◎: 90% or more.
○: 80% or more and less than 90%.
△: 70% or more and less than 80%.
×: Less than 70%.

[Synthesis Example 1] Production of polycarbonate diol P-1

A 1 L glass flask (hereinafter, also referred to as a "reactor") equipped with a rectifying column packed with a regular packing material, and a stirring apparatus was charged with 240 g of 1,5-pentanediol, 262 g of 1,6-hexanediol, and 398 g of ethylene carbonate. Then, 0.047 g of titanium tetra-n-butoxide was placed therein as a catalyst. While the reactor was dipped in an oil bath of 170°C and a portion of the distillate was extracted, the mixture was reacted at a reaction temperature of 155°C for 12 hours. Subsequently, the reactor was connected directly to a condenser. The temperature of the oil bath was raised to 190°C. Then, the pressure was gradually lowered, and the reaction was further performed for 5 hours to obtain polycarbonate diol P-1 (450 g) which was liquid at ordinary temperature.

The hydroxy value of the obtained polycarbonate diol P-1 was 57.5 mgKOH/g. The number-average molecular weight of the obtained polycarbonate diol P-1 was 1951.

[Synthesis Example 2] Production of polycarbonate diol P-2

The same apparatus as in Synthesis Example 1 described above was used and charged with 257 g of 2-methyl-1,3-propanediol, 198 g of 1,4-butanediol, and 445 g of ethylene carbonate. Then, 0.09 g of titanium tetra-n-butoxide was placed therein as a catalyst. While the reactor was dipped in an oil bath of 180°C and a portion of the distillate was extracted, the mixture was reacted at a reaction temperature of 155°C for 24 hours. Subsequently, the reactor was connected directly to a condenser. The temperature of the oil bath was raised to 180°C. Then, the pressure was gradually lowered, and the reaction was further performed for 3 hours to obtain polycarbonate diol P-2 (248 g). The hydroxy value of the obtained polycarbonate diol P-2 was 55.7 mgKOH/g. The number-average molecular weight of the obtained polycarbonate diol P-2 was 2014.

[Synthesis Example 3] Production of polycarbonate diol P-3

The same apparatus as in Synthesis Example 1 described above was used and charged with 397 g of 1,4-butanediol, 8.3 g of 1,10-decanediol, and 419 g of ethylene carbonate. Then, 0.047 g of titanium tetra-n-butoxide was placed therein as a catalyst. While the reactor was dipped in an oil bath of 170°C and a portion of the distillate was extracted, the mixture was reacted at a reaction temperature of 160°C for 10 hours. Subsequently, the reactor was connected directly to a condenser. The temperature of the oil bath was raised to 185°C. Then, the pressure was gradually lowered, and the reaction was further performed for 2 hours to obtain polycarbonate diol P-3 (401 g). The hydroxy value of the obtained polycarbonate diol P-3 was 56.3 mgKOH/g. The number-average molecular weight of the obtained polycarbonate diol P-3 was 1992.

[Synthesis Example 4] Production of polycarbonate diol P-4

The same apparatus as in Synthesis Example 1 described above was used and charged with the same starting materials as therein. Then, while the reactor was dipped in an oil bath of 170°C and a portion of the distillate was extracted, the mixture was reacted at a reaction temperature of 155°C for 12 hours. Subsequently, the reactor was connected directly to a condenser. The temperature of the oil bath was raised to 190°C. Then, the pressure was gradually lowered, and the reaction was further performed for 4 hours to obtain polycarbonate diol P-1 (462 g).

The hydroxy value of the obtained polycarbonate diol P-4 was 137.8 mgKOH/g. The number-average molecular

weight of the obtained polycarbonate diol P-4 was 814.

[Example 1] Production of carbonate group-containing polyol A-1

A 1 L glass flask (hereinafter, also referred to as a "reactor") equipped with a stirring apparatus was charged with 189 g of the "polycarbonate diol P-1" obtained in Synthesis Example 1, 90 g of "Newpol PE-61" (trade name, polyoxyethylene polyoxypropylene glycol, number-average molecular weight: approximately 2000) manufactured by Sanyo Chemical Industries, Ltd., and 21 g of "P-2030" (trade name, poly-3-methyl-1,5-pentanediol isophthalate, number-average molecular weight: approximately 2000) manufactured by Kuraray Co., Ltd. Subsequently, the mixture was heated with stirring, and kept at approximately 160°C in terms of the inside temperature of the reactor for 13 hours to obtain a carbonate group-containing polyol A-1. The progression and the like of transesterification reaction was confirmed by subjecting the reaction solution to GPC measurement over time, and confirming the disappearance of peaks derived from the starting materials and the appearance of a peak derived from a product over time.

Each physical property of the obtained carbonate group-containing polyol A-1 was measured by the method described above. The results are shown in Table 1.

[Examples 2 to 11]

Carbonate group-containing polyol A-2 to A-11 of Examples 2 to 11 were obtained through reaction using the same conditions and method as in Example 1 except that the type of each starting material and the amount of each starting material added were each changed as described in Table 1. Each physical property of the obtained carbonate group-containing polyol A-2 to A-11 was measured by the method described above. The results are shown in Tables 1 and 2.

[Example 12]

The same apparatus as in Example 1 described above was used and charged with 189 g of the "polycarbonate diol P-1" obtained in Synthesis Example 1, 90 g of "Newpol PE-61", and 21 g of "P-2030", as in Example 1. Subsequently, the mixture was heated with stirring, and kept at approximately 160°C in terms of the inside temperature of the reactor for 13 hours. Then, the reactor was connected directly to a condenser. The temperature of the oil bath was raised to 185°C. Then, the pressure was gradually lowered, and the reaction was further performed for 2 hours to obtain a carbonate group-containing polyol A-12. Each physical property of the obtained carbonate group-containing polyol A-12 was measured by the method described above. The results are shown in Table 2.

[Comparative Example 1]

The same apparatus as in Example 1 described above was used and charged with 189 g of the "polycarbonate diol P-1" obtained in Synthesis Example 1, 90 g of "Newpol PE-61", and 21 g of "P-2030". Subsequently, the mixture was stirred for 0.5 hours while heated at approximately 40°C which was a reaction temperature causing no transesterification reaction, to obtain polyol mixture B-1. Each physical property of the obtained polyol mixture B-1 was measured by the method described above. The results are shown in Table 2. In Table 2, the content (%) of the constituent unit (A) in Comparative Example 1 means the total mass of the constituent unit (A) in all the polymers based on the total mass of the constituent units (A), (B) and (C) in all the polymers contained in the polyol mixture B-1.

[Comparative Examples 2 and 3]

Carbonate group-containing polyols B-2 and B-3 of Comparative Examples 2 and 3 were obtained through reaction using the same apparatus as in Example 1 described above and using the same conditions and method as in Example 1 except that the type of each starting material and the amount of each starting material added were each changed as described in Table 2. Each physical property of the obtained carbonate group-containing polyols B-2 and B-3 was measured by the method described above. The results are shown in Table 2.

[Table 1]

| | Example 1 | Example 2 | Example 3 | Example 4 | Example 5 | Example 6 | Example 7 | Example 8 |
|---|---|---|---|---|---|---|---|---|
| Polyol composition | A-1 | A-2 | A-3 | A-4 | A-5 | A-6 | A-7 | A-8 |
| P-1 (g) | 189 | 189 | 189 | 81 | 90 | 162 | 129 | 189 |
| P-2 (g) | | | | | | | | |
| P-3 (g) | | | | | | | | |
| P-4 (g) | | | | | | | | |
| PTMG2000 (g) | | | | | | | | 90 |
| PE-61 (g) | 90 | 90 | 90 | 210 | 120 | 120 | 150 | |
| P-2010 (g) | | 21 | | | | | | |
| P-2020 (g) | | | 21 | | | | | |
| P-2030 (g) | 21 | | | 9 | 90 | 18 | 21 | 21 |
| Total (g) | 300 | 300 | 300 | 300 | 300 | 300 | 300 | 300 |
| Appearance | Transpar ent liquid | Transpar ent liquid | Transpar ent liquid | Transpar ent liquid | Transpar ent liquid | Transpar ent liquid | Transpar ent liquid | Transpar ent liquid |
| Hydroxy value (mg-KOH/g) | 56.1 | 56.9 | 55.1 | 55.4 | 53.6 | 54.3 | 54.1 | 56.1 |
| Number-average molecular weight | 2000 | 1973 | 2037 | 2024 | 2094 | 2067 | 2073 | 2000 |
| Content of constituent (A) | 60 | 60 | 60 | 26 | 29 | 51 | 41 | 60 |
| Viscosity (50°C) | 2730 | 2170 | 3360 | 600 | 2740 | 2090 | 1330 | 5070 |
| Viscosity evaluation results | ○ | ◎ | ○ | ◎ | ○ | ○ | ◎ | △ |

[Table 2]

| | Example 9 | Example 10 | Example 11 | Example 12 | Comparative Example 1 | Comparative Example 2 | Comparative Example 3 |
|---|---|---|---|---|---|---|---|
| Polyol composition | A-9 | A-10 | A-11 | A-12 | B-1 | B-2 | B-3 |
| P-1 (g) | | | | 189 | 189 | 50 | 270 |
| P-2 (g) | 189 | | | | | | |
| P-3 (g) | | 189 | | | | | |
| P-4 (g) | | | 189 | | | | |
| PTMG2000 (g) | | | | | | | |
| PE-61 (g) | 90 | 90 | 90 | 90 | 90 | 120 | 20 |
| P-2010 (g) | | | | | | | |
| P-2020 (g) | | | | | | | |
| P-2030 (g) | 21 | 21 | 21 | 21 | 21 | 130 | 10 |
| Total (g) | 300 | 300 | 300 | 300 | 300 | 300 | 300 |
| Appearance | Transpare nt liquid | Transpare nt liquid | Transpare nt liquid | Transpare nt liquid | White turbidity | Transparent liquid | Transparent liquid |
| Hydroxy value | 55.8 | 55.3 | 109.4 | 38.1 | 54.5 | 58.1 | 55.1 |
| Number-average molecular weight | 2011 | 2031 | 1026 | 2943 | 2059 | 1930 | 2037 |
| Content of constituent (A) | 61 | 60 | 56 | 61 | 60 | 16 | 85 |
| Viscosity (50°C) | 4840 | 3300 | 1510 | 9400 | Layer separation | 4530 | 11860 |
| Viscosity evaluation results | ○ | ○ | ◎ | △ | ×× | ○ | × |

The abbreviations of the polyol compositions in Tables 1 and 2 are as follows.
PTMG2000: PTMG2000 (manufactured by Mitsubishi Chemical Corp., polytetramethylene ether glycol, number-average molecular weight: approximately 2000)
PE-61: Newpol PE-61 (manufactured by Sanyo Chemical Industries, Ltd., polyoxyethylene polyoxypropylene glycol, number-average molecular weight: approximately 2000)
P-2010: Kuraray Polyol P-2010 (manufactured by Kuraray Co., Ltd., poly-3-methyl-1,5-pentylene adipate diol, number-average molecular weight: approximately 2000) P-2020: Kuraray Polyol P-2020 (manufactured by Kuraray Co., Ltd., poly-3-methyl-1,5-pentanediol terephthalate, number-average molecular weight: approximately 2000)
P-2030: Kuraray Polyol P-2030 (manufactured by Kuraray Co., Ltd., poly-3-methyl-1,5-pentanediol isophthalate, number-average molecular weight: approximately 2000)

[Application Example 1] Synthesis of polyurethane film PA-1

In a 500 ml separable flask in which a thermocouple and a condenser were installed, 39 g of the "carbonate group-containing polyol A-1" obtained in Example 1, 229 g of N,N-dimethylformamide (DMF) (solid content: set to 20% by mass), and 0.27 g of a 1% solution of dibutyltin dilaurate in toluene (50 ppm based on the total mass of MDI and the carbonate group-containing polyol) were placed, and warmed in an oil bath of 40°C. While the solution in the flask was stirred at 100 rpm in a nitrogen atmosphere in the flask, 15.1 g of MDI (3.09 times [mol] based on OH [mol] of the carbonate group-containing polyol) was added dropwise thereto. The solution in the flask was further stirred for approximately 1.5 hours. The consumption of a theoretical amount was confirmed by the analysis of an isocyanate group concentration to obtain a prepolymer. Subsequently, a necessary amount 3.3 g of 1,4-butanediol (1,4-BDO) calculated from residual isocyanate was added in divided portions into the flask. The solution in the flask was stirred for approximately 1 hour. Then, approximately 1 g of ethanol was added thereto, and the solution in the flask was further stirred for 30 minutes to obtain a solution of polyurethane having a number-average molecular weight of 75300.

The obtained polyurethane was added dropwise to the upper part of a glass plate (JIS R3202, 2 mm × 100 mm × 150 mm), which was then coated using a 0.8 to 2.5 mm thick applicator such that a dry film thickness was 50 to 400 μm. The coating was dried for 2 hours on a hot plate having a surface temperature of 60°C and subsequently for 12 hours in an oven of 80°C. The coating was further left standing under constant temperature and humidity conditions of 23°C and 55% RH for 12 hours or longer to obtain polyurethane film PA-1. The obtained polyurethane film PA-1 was subjected to the evaluation of each physical property by the method described above. The evaluation results are shown in Table 3.

[Application Examples 2 to 12]

Polyurethane films PA-2 to PA-12 were obtained through reaction using the same conditions and method as in Application Example 1 except that the type of each starting material was changed as described in Table 3. The obtained polyurethane films PA-2 to PA-12 were subjected to the evaluation of each physical property by the method described above. The evaluation results are shown in Tables 3 and 4.

[Application Comparative Examples 1 to 3]

Polyurethane films PB-1 to PB-3 were obtained through reaction using the same conditions and method as in Application Example 1 except that the type of each starting material was changed as described in Table 3. The obtained polyurethane films PB-1 to PB-3 were subjected to the evaluation of each physical property by the method described above. The evaluation results are shown in Table 4.

[Table 3]

| | Application Example 1 | Application Example 2 | Application Example 3 | Application Example 4 | Application Example 5 | Application Example 6 | Application Example 7 |
|---|---|---|---|---|---|---|---|
| Polyurethane film | PA-1 | PA-2 | PA-3 | PA-4 | PA-5 | PA-6 | PA-7 |
| Polyol composition | A-1 | A-2 | A-3 | A-4 | A-5 | A-6 | A-7 |
| | 39 | 39 | 39 | 39 | 39 | 39 | 39 |
| MDI (g) | 15.1 | 15.3 | 14.8 | 14.9 | 14.4 | 14.6 | 14.6 |
| 1,4-BDO (g) | 3.3 | 3.2 | 3.2 | 3.2 | 3.1 | 3.2 | 3.3 |
| DMF (g) | 229 | 232 | 230 | 230 | 228 | 229 | 228 |
| DBTL (1% solution in toluene) (g) | 0.27 | 0.27 | 0.27 | 0.27 | 0.29 | 0.27 | 0.27 |
| Polyol composition handleability | ○ | ○ | ○ | ○ | ○ | ○ | ○ |
| Number-average molecular weight (Mn) | 75300 | 73600 | 69500 | 66100 | 89700 | 79200 | 66500 |
| Glass transition temperature (°C) | -16 | -14 | -15 | -24 | -8 | -16 | -22 |
| Low-temperature flexibility | ◎ | ○ | ◎ | ◎ | △ | ◎ | ◎ |
| Moist heat resistance | ◎ | × | ○ | × | ○ | ○ | |

[Table 4]

| | Application Example 8 | Application Example 9 | Application Example 10 | Application Example 11 | Application Example 12 | Application Comparative Example 1 | Application Comparative Example 2 | Application Comparative Example 3 |
|---|---|---|---|---|---|---|---|---|
| Polyurethane film | PA-8 | PA-9 | PA-10 | PA-11 | PA-12 | PB-1 | PB-2 | PB-3 |
| Polyol composition | A-8 | A-9 | A-10 | A-11 | A-12 | B-1 | B-2 | B-3 |
| | 39 | 39 | 39 | 39 | 39 | 39 | 39 | 39 |
| MDI (g) | 14.6 | 15.0 | 14.9 | 29.3 | 10.2 | 14.6 | 15.6 | 14.8 |
| 1,4-BDO (g) | 3.1 | 3.5 | 3.5 | 6.8 | 2.2 | 3.3 | 3.5 | 3.3 |
| DM F (g) | 228 | 230 | 230 | 302 | 207 | 229 | 234 | 229 |
| DBTL (1% solution in toluene) (g) | 0.27 | 0.27 | 0.28 | 0.35 | 0.25 | 0.28 | 0.27 | 0.27 |
| Polyol composition handleability | ○ | ○ | ○ | ○ | ○ | x | ○ | △ |
| Number-average molecular weight (Mn) | 63800 | 72200 | 67000 | 60400 | 64700 | 72700 | 61600 | 59600 |
| Glass transition temperature (°C) | -20 | -19 | -11 | -8 | -22 | -9 | -14 | -1 |
| Low-temperature flexibility | ◎ | ◎ | ○ | △ | ◎ | △ | ○ | × |
| Moist heat resistance | ○ | ○ | ◎ | ◎ | ○ | ○ | × | ◎ |

## Claims

1. A carbonate group-containing polyol

having a number-average molecular weight of 300 to 10000, and having
a constituent unit (A) represented by the following formula (A),
a constituent unit (B) represented by the following formula (B), and
a constituent unit (C) represented by the following formula (C), wherein
a content of the constituent unit (A) is 20 to 80% by mass based on the total mass of the constituent units (A), (B), and (C):

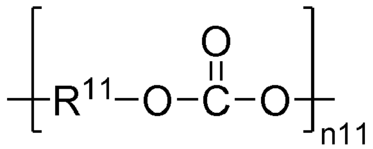 (A)

wherein each $R^{11}$ is independently a linear, branched or cyclic aliphatic hydrocarbon group having 3 to 12 carbon atoms or an aromatic hydrocarbon group having 6 to 12 carbon atoms, and a plurality of $R^{11}$ moieties are the same as or different from each other; and n11 is an arbitrary integer of 1 to 60 and is the total number of the constituent unit of the formula (A) contained in one carbonate group-containing polyol molecule,

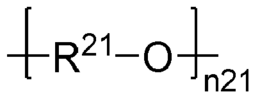 (B)

wherein each $R^{21}$ is independently a linear, branched or cyclic aliphatic hydrocarbon group having 2 to 20 carbon atoms or an aromatic hydrocarbon group having 6 to 20 carbon atoms, and a plurality of $R^{21}$ moieties are the same as or different from each other; and n21 is an arbitrary integer of 2 to 80 and is the total number of the constituent unit of the formula (B) contained in one carbonate group-containing polyol molecule,

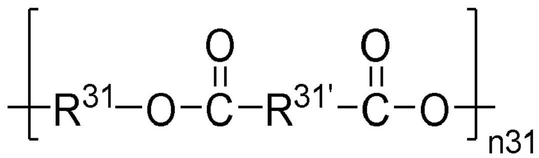 (C)

wherein $R^{31}$ and $R^{31'}$ are each independently a linear, branched or cyclic aliphatic hydrocarbon group having 3 to 12 carbon atoms or an aromatic hydrocarbon group having 6 to 12 carbon atoms, and a plurality of $R^{31}$ or $R^{31'}$ moieties are the same as or different from each other; and n31 is an arbitrary integer of 1 to 60 and is the total number of the constituent unit of the formula (C) contained in one carbonate group-containing polyol molecule.

2. The carbonate group-containing polyol according to claim 1, wherein
a content of the constituent unit (B) in the carbonate group-containing polyol is 1.0 to 80% by mass based on the total mass of the constituent units (A), (B), and (C).

3. The carbonate group-containing polyol according to claim 1 or 2, wherein
a content of the constituent unit (C) in the carbonate group-containing polyol is 1 to 40% by mass based on the total mass of the constituent units (A), (B), and (C).

4. The carbonate group-containing polyol according to any one of claims 1 to 3, wherein a content of the constituent unit (C) is 0.1% to 80% by mass based on a content of the constituent unit (B).

5. The carbonate group-containing polyol according to any one of claims 1 to 4, wherein
in the constituent unit (A), each $R^{11}$ is independently a linear aliphatic hydrocarbon group having 3 to 10 carbon atoms or a branched aliphatic hydrocarbon group having 3 to 10 carbon atoms.

**6.** The carbonate group-containing polyol according to any one of claims 1 to 5, wherein in the constituent unit (B), each $R^{21}$ is independently a linear aliphatic hydrocarbon group having 2 to 4 carbon atoms or a branched aliphatic hydrocarbon group having 3 to 6 carbon atoms.

**7.** The carbonate group-containing polyol according to any one of claims 1 to 6, wherein in the constituent unit (C), each $R^{31}$ is independently, a linear aliphatic hydrocarbon group having 3 to 10 carbon atoms or a branched aliphatic hydrocarbon group having 3 to 10 carbon atoms.

**8.** The carbonate group-containing polyol according to any one of claims 1 to 7, wherein in the constituent unit (C), each $R^{31'}$ is independently an aromatic hydrocarbon group having 6 to 12 carbon atoms.

**9.** The carbonate group-containing polyol according to any one of claims 1 to 8, wherein the carbonate group-containing polyol has a viscosity of 100 to 5000 mPa·s as measured at 50°C using a rotational viscometer (type E viscometer (manufactured by Toki Sangyo Co., Ltd., TVE-22HT, cone: No. 6)).

**10.** A polyurethane resin composition obtained by reacting

the carbonate group-containing polyol according to any one of claims 1 to 9 with
a compound having an isocyanate group.

**11.** Artificial leather comprising the polyurethane resin composition according to claim 10.

**12.** A leather-like sheet comprising the polyurethane resin composition according to claim 10 or 11.

Europäisches Patentamt
European Patent Office
Office européen des brevets

# EUROPEAN SEARCH REPORT

Application Number
EP 23 19 0151

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br><br><br><br><br><br><br><br>Y | ROSLANIEC Z ET AL: "DIELECTRIC RELAXATION OF POLY(ESTER-ETHER-CARBONATE) MULTIBLOCK TERPOLYMERS", COLLOID & POLYMER SCIENCE, SPRINGER VERLAG, HEIDELBERG, DE, vol. 273, no. 1, 1 January 1995 (1995-01-01), pages 58-65, XP001015376, ISSN: 0303-402X, DOI: 10.1007/BF00655675<br>* abstract *<br>* page 58, right-hand column, last paragraph *<br>* page 59, left-hand column, paragraph 2; figure 1; table 1 * | 1-9<br><br><br><br><br><br><br><br><br>10-12 | INV.<br>C08G18/44<br>C08G18/10<br>C08G18/24<br>C08G18/32<br>C08G18/76<br>C08G64/30<br>D06N3/14 |
| Y | US 2013/095087 A1 (SHALABY SHALABY W [US] ET AL) 18 April 2013 (2013-04-18)<br>* abstract *<br>* paragraphs [0024], [0027], [0028]; claims * | 10 | |
| Y | WO 2021/095443 A1 (ASAHI CHEMICAL IND [JP]) 20 May 2021 (2021-05-20)<br>* abstract *<br>& EP 4 059 993 A1 (ASAHI CHEMICAL IND [JP]) 21 September 2022 (2022-09-21)<br>* abstract *<br>* paragraphs [0009], [0109] - [0120]; claims; examples * | 10-12 | TECHNICAL FIELDS SEARCHED (IPC)<br>C08G<br>D06N |

-/--

The present search report has been drawn up for all claims

| Place of search | Date of completion of the search | Examiner |
|---|---|---|
| Munich | 21 December 2023 | Nazario, Luis |

2

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 23 19 0151

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | SOSNIK A ET AL: "Reverse thermo-responsive poly(ethylene oxide) and poly(propylene oxide) multiblock copolymers", BIOMATERIALS, ELSEVIER, AMSTERDAM, NL, vol. 26, no. 4, 1 February 2005 (2005-02-01), pages 349-357, XP027768300, ISSN: 0142-9612 [retrieved on 2005-02-01] * page 350, right-hand column, paragraph 3 * * Scheme 3 * ----- | 1-12 | |
| A | CN 105 111 406 A (HEFEI ANLI POLYURETHANE NEW MATERIAL CO LTD) 2 December 2015 (2015-12-02) * abstract; example 1 * ----- | 1-12 | |
| | | | TECHNICAL FIELDS SEARCHED (IPC) |

The present search report has been drawn up for all claims

2

| Place of search | Date of completion of the search | Examiner |
|---|---|---|
| Munich | 21 December 2023 | Nazario, Luis |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................
& : member of the same patent family, corresponding document

EPO FORM 1503 03.82 (P04C01)

## ANNEX TO THE EUROPEAN SEARCH REPORT ON EUROPEAN PATENT APPLICATION NO.

EP 23 19 0151

This annex lists the patent family members relating to the patent documents cited in the above-mentioned European search report. The members are as contained in the European Patent Office EDP file on
The European Patent Office is in no way liable for these particulars which are merely given for the purpose of information.

21-12-2023

| Patent document cited in search report | Publication date | Patent family member(s) | Publication date |
|---|---|---|---|
| US 2013095087 A1 | 18-04-2013 | US 2013095087 A1 | 18-04-2013 |
| | | US 2014348810 A1 | 27-11-2014 |
| | | US 2019167839 A1 | 06-06-2019 |
| WO 2021095443 A1 | 20-05-2021 | CN 114729178 A | 08-07-2022 |
| | | EP 4059993 A1 | 21-09-2022 |
| | | JP WO2021095443 A1 | 20-05-2021 |
| | | US 2023023221 A1 | 26-01-2023 |
| | | WO 2021095443 A1 | 20-05-2021 |
| CN 105111406 A | 02-12-2015 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 3252420 A
- JP 2006124486 A
- JP 2021098775 A
- JP 2021028161 A